# EUROPEAN PATENT APPLICATION

(11) **EP 1 435 300 A1**
(43) Date of publication of application: **07.07.2004**
(21) Application number: 02801521.2
(22) Date of filing: 09.10.2002
(51) Int. Cl.: B60C 11/01, B60C 11/13

(54) **PNEUMATIC TIRE**

(30) Priority: 11.10.2001 JP 2001314310
(71) Applicant: Sumitomo Rubber Industries, Ltd., Kobe-shi, Hyogo 651-0072 (JP)
(72) Inventor: NISHI, Minoru Sumitomo Rubber Industries, Ltd., Kobe-shi, Hyogo 651-0072 (JP)
(74) Representative: Manitz, Finsterwald & Partner GbR
(86) International application number: PCT/JP2002/010494
(87) International publication number: WO 2003/033280

(57) **Abstract**

In a pneumatic tire, a uneven wear-preventing narrow groove 4 is formed on a tread surface 2a extending from a tread edge E in a tire circumferential direction inside a tire axial direction at a small distance L. At least a groove bottom surface 4b of the narrow groove 4 and an outer groove wall surface 4o outside of the tire axial direction are formed of crack-resistant layers 9 made of crack-resistant rubber material Cg having excellent crack-resistance. A thickness t1 of the crack-resistant layer 9 perpendicular to the groove bottom surface 4b at right angles in a tire radial direction is set to 1 to 5mm, and a thickness t2 perpendicular to the outer groove wall surface 4o at right angles is set to 1 to 6mm.

## Description

### TECHNICAL FIELD

The present invention relates to a pneumatic tire capable of preventing uneven wear.

### BACKGROUND TECHNIQUE

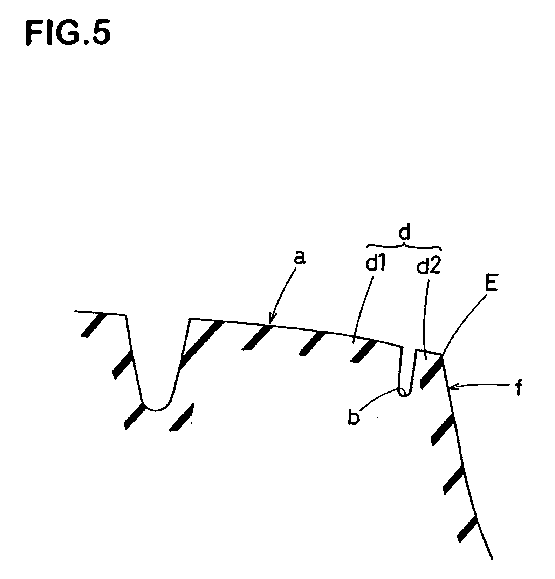

As shown in Fig.5, there is proposed a pneumatic tire formed at its tread surface a with an uneven wear-preventing narrow groove b extending from a tread edge E in a tire circumferential direction at inner side of a tire axial direction at a small distance from the tread edge E (e.g., Japanese Patent Application Laid-open No.H6-183209). This narrow groove b divides a rib d closer to the tread edge into a main rib part d1 inside the tire axial direction of the narrow groove b and a narrow rib part d2 formed between the narrow groove b and a buttress surface f and having low rigidity. Wear energy caused by running of a vehicle is concentrated on the narrow rib part d2 having the low rigidity, thereby restraining the uneven wear from proceeding toward the main rib part d1.

According to such a narrow rib part d2, however, since the rigidity is small, relatively great bending deformation is repeated inside and outside of the tire axial direction during running, and the narrow rib part d2 receives great shear force between a road surface and the narrow rib part d2 when the tire rides over a curb or the vehicle turns. Therefore, a crack is generated on a groove bottom surface of the narrow groove b at a relatively early stage, a crack is proceeded into the rubber from the former crack, and the narrow rib part d2 is damaged in some cases. Especially in the case of a heavy load tire used under a great load, a great shear force is generated in a tire mounted to a trailer shaft at the time of turning motion of the vehicle and thus, the damage is prone to appear clearly. If the narrow rib part d2 becomes chipped, the uneven wear is prone to be generated in the main rib part d1.

Thereupon, in order to prevent the narrow rib part d2 from becoming chipped, it is conceived that a depth of the narrow groove b is reduced and the rigidity of the narrow rib part d2 is increased. According to this method, however, it is difficult to concentrate the wear energy on the narrow rib part d2, and the suppression effect of the uneven wear is reduced.

The present invention has been accomplished in view of such a problem, and it is an object to provide a pneumatic tire capable of preventing the narrow rib part from becoming chipped and restraining the uneven wear from being generated for a long term based on an idea that a groove bottom surface of a narrow groove and an outer groove wall surface outside of the tire axial direction are formed of crack-resistant layer made of crack-resistant rubber material having excellent crack-resistance unlike a tread rubber, and thicknesses of the groove bottom surface and the groove wall surface are appropriately limited.

### DISCLOSURE OF THE INVENTION

A present invention described in claim 1 provides a pneumatic tire in which an uneven wear-preventing narrow groove is formed on a tread surface extending from a tread edge in a tire circumferential direction inside a tire axial direction at a small distance, wherein at least a groove bottom surface of the narrow groove and an outer groove wall surface outside of the tire axial direction are formed of crack-resistant layers made of crack-resistant rubber material having excellent crack-resistance, a thickness t1 of the crack-resistant layer at the groove bottom surface in a tire radial direction is set to 1 to 5mm, and a thickness t2 perpendicular to the outer groove wall surface at right angles is set to 1 to 6mm.

An invention described in claim 2 is characterized in that, an inner groove wall surface of the narrow groove inside the tire axial direction is also formed of crack-resistant layer using the crack-resistant rubber material, the crack-resistant layer has substantially U-shaped cross section, a thickness t3 of the crack-resistant layer perpendicular to the inner groove wall surface is set to 2mm or less.

An invention described in claim 3 is characterized in that, a tensile strength of the crack-resistant rubber material is 23 to 28MPa, and elongation at the time of cutting thereof is 550 to 620%.

An invention described in claim 4 is characterized in that, in a state in which the crack-resistant rubber material is left in atmosphere of 100°C for 72 hours, the tensile strength thereof is 22MPa or higher and the elongation at the time of cutting is 480% or higher.

### BRIEF DESCRIPTION OF THE DRAWINGS

Fig.1 is a partial sectional view of a pneumatic tire of a present embodiment.
Fig.2 is a development view of a tread surface.
Fig.3 is a partially enlarged view of Fig.1.
Fig.4 is a partially enlarged view showing another embodiment of the present invention.
Fig.5 is a partial sectional view showing a conventional uneven wear-preventing narrow groove.

### BEST MODE FOR CARRYING OUT THE INVENTION

An embodiment of the present invention will be explained based on the drawings.

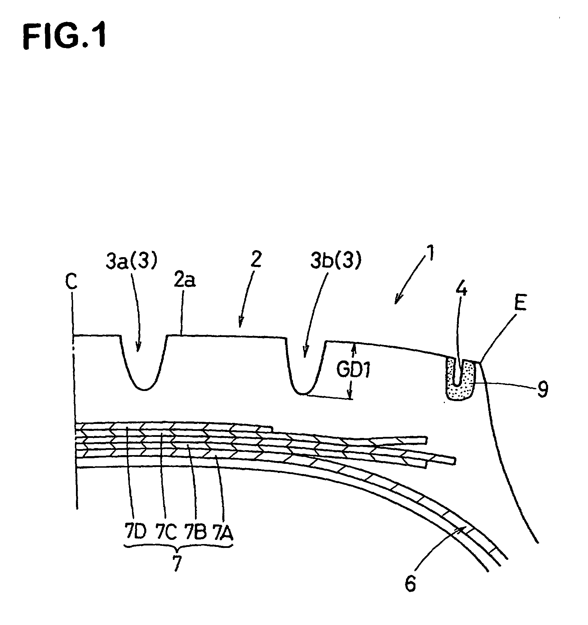

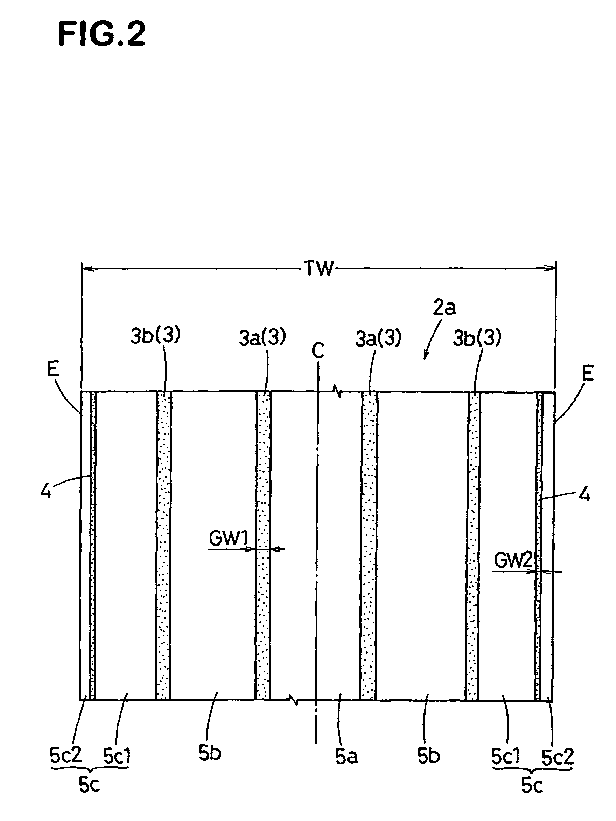

Fig.1 is a partial sectional view of a pneumatic tire 1 of the embodiment, and Fig.2 is a development view showing a developed tread surface of the pneumatic tire 1.

In the drawings, the pneumatic tire 1 includes a carcass 6 of a radial structure comprising a steel cord, and a belt layer 7 having four belt plies 7A to 7D comprising steel cord disposed outside of the carcass 6 and inside of a tread portion 2. The pneumatic tire 1 is a radial tire for heavy load used for a truck, a bus, a small truck and the like.

As shown in Fig.2, the pneumatic tire 1 is formed and illustrated at its tread surface 2a with a plurality of circumferential main grooves 3 continuously extending in a tire circumferential direction, and uneven wear-preventing narrow grooves 4 extending from a tread edge E in the tire circumferential direction inside the tire axial direction at a small distance L therebetween.

The circumferential main grooves 3, for example, comprise a pair of inner circumferential main grooves 3a and 3a formed on opposite sides of a tire equator C, and a pair of circumferential main grooves 3b and 3b formed on outer sides of the circumferential main grooves 3a and 3a. The grooves extend straightly in the drawing, but the groove may be appropriately bent into a zigzag shape, a wave shape or the like. It is preferable, for example, that a groove width GW1 of each of the circumferential main grooves 3 is about 2 to 8% of a tread width TW, and more preferably about 5 to 8% for ensuring the drainage. Similarly, it is preferable, for example, that a groove depth GD1 (shown in Fig.1) of the circumferential main groove 3 is about 3 to 10% of the tread width TW, more preferably about 5 to 10%. In addition, the tread width TW is a distance between tread edges E and E in the tire axial direction.

In this specification, unless otherwise specified, sizes of various portions of the tire are of the tires of standard condition in which the tire is assembled into a standard rim and a standard internal pressure is charged into the tire but loaded with no tire load. In specification system including specification on which a tire is based, the term "standard rim" is a rim whose specification are determined for each tire. For example, the rim is a "standard rim" in the case of JATMA, the rim is a "Design Rim" in the case of TRA, and the rim is a "Measuring Rim" in the case of ETRTO. In the specification system including specification on which a tire is based, the term "standard internal pressure" is an air pressure whose specification are determined for each tire, and the standard internal pressure is a maximum air pressure in the case of JATMA, the standard internal pressure is a maximum value described in "TIRE LOAD LIMITS AT VARIOUS COLD INFLATION PRESSURE" in the case of TRA, and the standard internal pressure is an "INFLATION PRESSURE" in the case of ETRTO. If the tire is for a passenger car, the standard internal pressure is 180KPa.

By providing the circumferential main groove 3, the tread portion 2 is divided into an inner rib part 5a formed between the inner circumferential main grooves 3a and 3a, intermediate rib parts 5b formed between the inner circumferential main grooves 3a and the outer circumferential main grooves 3b, and outer rib parts 5c formed between the circumferential main grooves 3b and the tread edges E. In this embodiment, the rib parts 5a to 5c are formed as ribs continuously extending in the tire circumferential direction, but one or more rib parts can be formed as block lines by forming a lateral groove (not shown) crossing the rib parts, the rib parts can be formed as block patterns, or rib block patterns, or rag patterns can be formed alternatively.

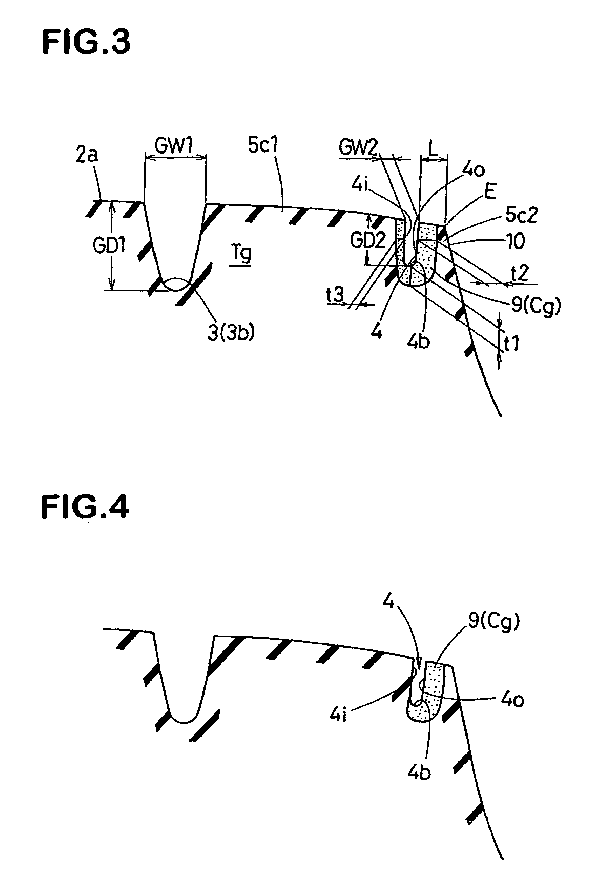

As shown in Fig.3 in an enlarged manner, the narrow grooves 4 comprises an outer groove wall surface 4o located outside of the tire axial direction, an inner groove wall surface 4i located inside of the tire axial direction, and a groove bottom surface 4b for connecting the outer groove wall surface 4o and the inner groove wall surface 4i. The groove bottom surface 4b has an arc cross section in this embodiment. In the narrow grooves 4, the outer groove wall surface 4o is away from the tread edge E inside the tire axial direction at a small distance L. With this arrangement, each of the outer rib parts 5c is divided into a main rib part 5c1 inside the tire axial direction of the narrow grooves 4, and a narrow rib part 5c2 having a smaller width than the main rib part 5c1 formed outside of the tire axial direction of the narrow grooves 4. The narrow rib part 5c2 has lower rigidity than that of the main rib part 5c1, great slip or deformation is generated between the narrow rib part 5c2 and a road surface during running or tire under a load, the wear energy is concentrated on the narrow rib part 5c2, thereby preventing uneven wear from being generated in the main rib part 5c1.

A shape of a cross section, a width, a depth and the like of the narrow grooves 4 are not especially limited, but it is preferable that a groove width GW2 is 20 to 25% of the groove width GW1 of the circumferential main groove 3, and more preferably 20 to 22%. It is preferable that a groove depth GD2 is 30 to 70% of the groove depth GD1 of the circumferential main groove 3, and more preferably 35 to 60%.

If the groove width GW2 of the narrow grooves 4 is less than 20% of the groove width GW1 of the circumferential main groove 3 or if the groove depth GD2 of the narrow grooves 4 is less than 30% of the groove depth GD1 of the circumferential main groove 3, the narrow lib part 5c2 is deformed substantially integrally with the main rib part 5c1 and it becomes difficult to concentrate the wear energy on the narrow lib part 5c2. On the contrary, if the groove width GW2 of the narrow grooves 4 exceeds 25% of the groove width GW1 of the circumferential main groove 3 or if the groove depth GD2 of the narrow grooves 4 exceeds 70% of the groove depth GD1 of the circumferential main groove 3, it is not preferable because the narrow rib part 5c2 becomes chipped at an early stage.

It is preferable that the small distance L is set to 3 to 10mm, and more preferably 5 to 7mm. If the small distance L is less than 3mm, the rigidity of the narrow rib part 5c2 is largely lowered, and there is a tendency that the narrow rib part 5c2 becomes chipped at an early stage. On the other hand, if the small distance L exceeds 10mm, the rigidity of the narrow rib part 5c2 is largely increased, and it becomes difficult to concentrate the wear energy on the narrow rib part 5c2.

In the case of the conventional pneumatic tire, since a groove surface of the narrow grooves 4 is formed of rubber material having the same composition as that of the tread rubber Tg deployed in tread portion, the crack-resistance with respect to large bending deformation is relatively low, it is conceived that crack is prone to be generated in the groove surface of the narrow grooves 4, the crack proceeds and the narrow rib part 5c2 becomes chipped at an early stage. Thereupon, in this embodiment, the groove bottom surface 4b, the outer groove wall surface 4o and the inner groove wall surface 4i on which large distortion is prone to act are formed of crack-resistant layers 9 having substantially U-shaped cross section.

The crack-resistant layer 9 is formed of crack-resistant rubber material Cg having different composition from that of the tread rubber Tg and having excellent crack-resistance. Therefore, even if the narrow rib part 5c2 is largely deformed, it is possible to delay the generation of the cracks in the groove bottom surface 4b, and groove wall surfaces 4o and 4i, and it is possible to restrain the narrow rib part 5c2 from becoming chipped for a long term. With this arrangement, it is possible to maintain the uneven wear-preventing effect by the narrow rib part 5c2 for a long term.

As results of various experiments by the present inventors, it was found that in order to restrain the narrow rib part 5c2 from becoming chipped for a long term, it was not sufficient only to form the crack-resistant layer 9, and it was necessary to appropriately limit thicknesses of various portions. First, it is necessary to set a thickness t1 of the crack-resistant layer 9 at the groove bottom surface 4b in the tire radial direction to 1 to 5mm, and more preferably to 2 to 4mm. If the thickness t1 is less than 1mm, since the crack-resistant layer 9 is too thin, the distortion thereof at the groove bottom surface 4b can not sufficiently be moderated, and the crack can not be prevented from being generated. On the other hand, if the thickness t1 exceeds 5mm, there is a tendency that distortion generated in the groove bottom by fine deformation generated a groove cracks.

If the groove bottom surface 4b of the narrow grooves 4 is arc in shape, it is preferable that the thickness t1 inside the arc portion is secured.

It is necessary that a thickness t2 which is perpendicular to the outer groove wall surface 4o of the crack-resistant layer 9 at right angles is set to 1 to 6mm, and more preferably to 2 to 5mm, and further preferably to 2 to 3mm. If the thickness t2 is less than 1mm, since the crack-resistant layer 9 is too thin, effect for moderating the distortion at the outer groove wall surface 4o is inferior, and it is not possible to restrain the crack from being generated. On the other hand, if the thickness t2 exceeds 6 mm, there is a tendency that uneven wear is prone to be generated in the narrow rib part 5c2 on the side of the narrow grooves 4.

Filling the standard of the thickness t2 is 1mm or more, it is preferable that a ratio (tread portion t2/L) between the small distance L of the tire axial direction between the tread edge E and the outer groove wall surface 4o, and the thickness t2 which is perpendicular to the outer groove wall surface 4o of the crack-resistant layer 9 at right angles is set to 0.3 or higher. If the ratio (t2/L) is less than 0.3, there is a tendency that the narrow rib part 5c2 is prone to become chipped.

In this embodiment, a thickness t3 of the crack-resistant layer 9 which is perpendicular to the inner groove wall surface 4i at right angles is set to about 1 to 2mm. If the thickness t3 exceeds 2mm, the main rib part 5c1 is formed of two kinds of rubber materials having different rigidities, i.e., the tread rubber Tg and crack-resistant rubber material Cg, and due to the difference in rigidity, uneven wear is prone to be generated in the main rib part 5c1. Therefore, if the inner groove wall surface 4i is to be formed, it is preferable that the thickness of the crack-resistant layer is relatively thin, e.g., 2mm or less. From such a viewpoint, the inner groove wall surface 4i may not be formed with the crack-resistant layer as shown in Fig.4.

A preferable example of material of the crack-resistant rubber material Cg is rubber polymer comprising natural rubber 100%. Preferable examples of additives to be added to the rubber polymer are, e.g., carbon black of SAF grade and/or silica.

It is preferable that the crack-resistant rubber material Cg has a tensile strength of 23 to 28MPa, more preferably 25 to 28MPa and further preferably 27 to 28MPa, and elongation at the time of cutting is 550 to 620%, more preferably 550 to 590% and further preferably 580 to 590%. With this, even when the narrow rib part 5c2 is largely deformed by the running load of the tire, it is possible to more reliably restrain the narrow rib part 5c2 from becoming chipped for a long term. The tensile strength and elongation at the time of cutting of the rubber material are values measured in accordance with "Tensile testing method of vulcanized rubber" in JIS K6251.

If the tensile strength of the crack-resistant rubber material Cg is less than 23MPa, when the narrow rib part 5c2 receives great shear force or dragging force, the narrow grooves 4 easily becomes chipped in some cases. If the tensile strength of the crack-resistant rubber material Cg exceeds 28MPa on the other hand, there is an adverse possibility that the elongation at the time of cutting is reduced. If both the tensile strength and the elongation at the time of cutting are increased, heat is prone to be generated, and there is a no preferable tendency that damage is prone to be caused by thermal fatigue. The tensile strength of such a rubber material can be adjusted by kinds of carbon black and silica in the rubber composition and by composition amount.

If the elongation at the time of cutting of the crack-resistant rubber material Cg is less than 580%, when the narrow rib part 5c2 receives great shear force or dragging force, crack is prone to be generated in the groove surface of the narrow grooves 4. The elongation at the time of cutting of the rubber material can also be adjusted by kinds of carbon black and silica in the rubber composition and by composition amount.

Since the crack-resistant rubber material Cg is exposed to atmosphere, it is preferable that the crack-resistant rubber material Cg is a rubber material whose crack-resistance deterioration by an affect of ultraviolet ray and ozone is small. Therefore, it is preferable that in a state in which the crack-resistant rubber material Cg is left in atmosphere of 100°C for 72 hours, the tensile strength thereof is 22MPa or higher and the elongation at the time of cutting is 480% or higher. The tensile strength and the elongation at the time of cutting at that time were measured with the authority of the JIS test after the crack-resistant rubber material Cg was left in the above atmosphere.

If the tensile strength is less than 22MPa or the elongation at the time of cutting is less than 480% after the crack-resistant rubber material Cg is left in the atmosphere of 100°C for 72 hours, there is a tendency that the crack preventing effect at the groove bottom becomes small. The tensile strength and the elongation at the time of cutting at that time were also measured with the authority of the JIS test after the crack-resistant rubber material Cg was left in the above atmosphere.

The above embodiment of the present invention has been explained based on the heavy load radial tire, but the invention should not be limited to this embodiment, and it is of course possible to apply the invention to a tire for a passenger car, and the narrow groove may be formed into a non-linear groove such as a zigzag groove or a wave-shaped groove, and the invention can variously be carried out.

### [Embodiment]

Heavy load radial tires having tire size of 11R22.5 were prototyped (for embodiments and a comparative example), and actual vehicle running test was carried out. The actual vehicle test was carried out in such a manner that the tires were assembled into rims of 7.50×22.5, internal pressure of 800kPa was charged, the tires were mounted to all wheels of a 10 tons flat body truck of 2DD, the vehicle was allowed to run through 40,000km on a predetermined running route (90% of expressway, 10% of road running), and state of the narrow groove was visually observed for every 10,000km. In all of the tires, the circumferential main grooves had the same shape, and the groove width GW1 was set to 9mm, and the groove depth GD1 was set to 14mm. The tire specifications and test results are shown in Table 1. In Table 2, examples of compositions of the crack-resistant rubber material and the tread rubber material are shown.

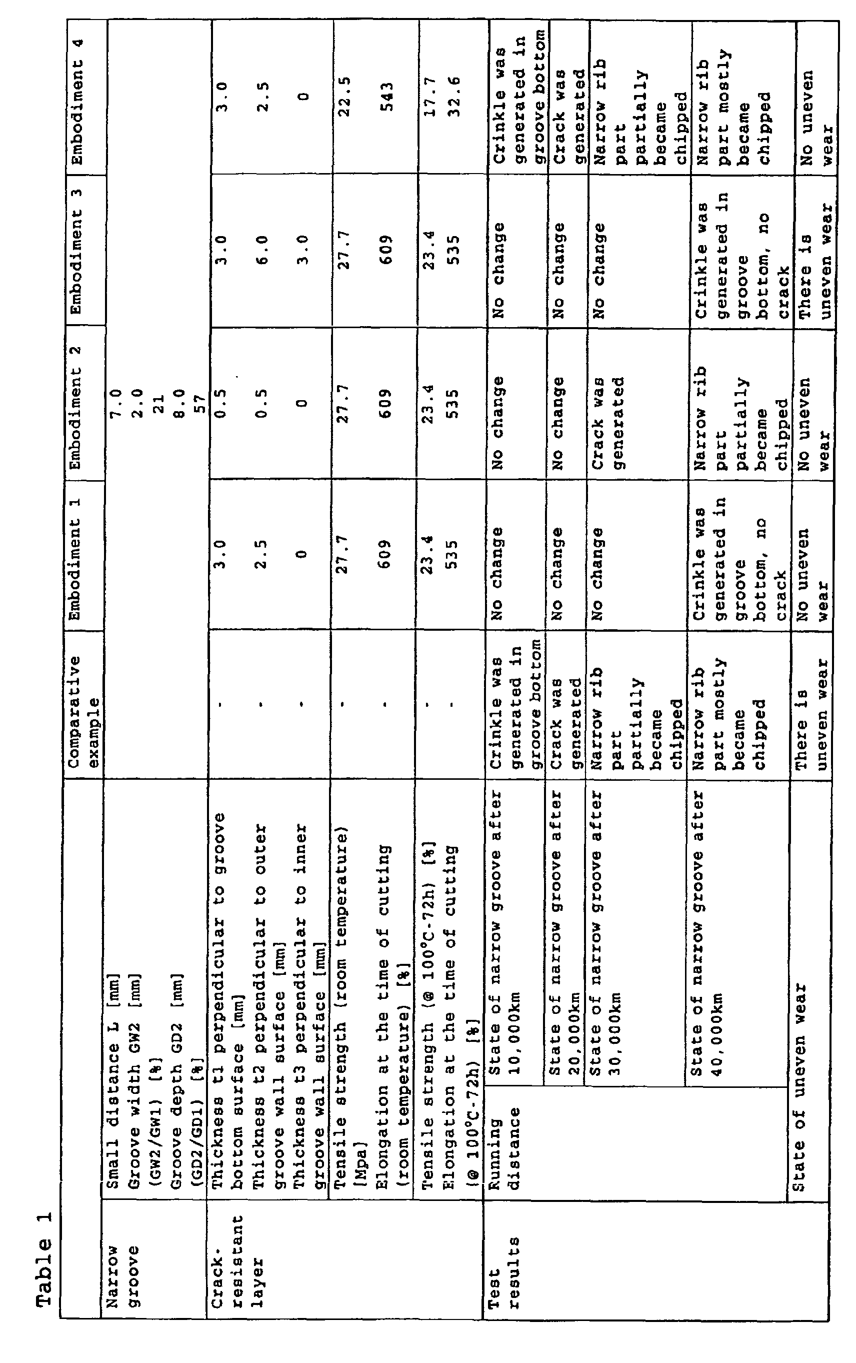

**Table 2**

| Composition of crack-resistant rubber material | |
|---|---|
| Composition | Parts by weight |
| NR | 100 |
| Carbon black (SAF) | 23 |
| Carbon black (ISAF) | 20 |
| Carbon black (HAF) | 13 |
| Silica | 13 |

| Composition of tread rubber | |
|---|---|
| Composition | Parts by weight |
| NR | 80 |
| BR | 20 |
| Carbon black (ISAF) | 49 |

As a result of the test, in the case of the embodiments, crinkle was found in the groove bottom surface of the narrow groove after about 40,000km running, but no crack was generated. On the other hand, in the case of the comparative example, after 10,000km running, cracks were generated in the groove bottom surfaces of the rear tires, and after about 20,000km running, cracks were generated also in the groove bottom surfaces of the narrow grooves of the front tires.

### INDUSTRIAL APPLICABILITY

As described above, according to the pneumatic tire of the present invention, the groove bottom surface of the uneven wear-preventing narrow groove and the outer groove wall surface outside of the tire axial direction of the tire are formed of crack-resistant layers made of crack-resistant rubber materials having excellent crack-resistance, and the thicknesses of various portions are limited. With this arrangement, it is possible to delay the generation of crack based on compression and tensile distortion acting on the groove bottom surface and the groove wall surface. With this, the present invention is of help to restrain the narrow rib part formed between the narrow groove and the tread edge from becoming chipped, and to maintain the uneven wear-preventing effect for a long term.

## Claims

1. A pneumatic tire in which an uneven wear-preventing narrow groove is formed on a tread surface extending from a tread edge in a tire circumferential direction inside a tire axial direction at a small distance, wherein
at least a groove bottom surface of said narrow groove and an outer groove wall surface outside of the tire axial direction are formed of crack-resistant layers made of crack-resistant rubber material having excellent crack-resistance,
a thickness t1 of said crack-resistant layer at the groove bottom surface in a tire radial direction is set to 1 to 5mm, and a thickness t2 perpendicular to said outer groove wall surface at right angles is set to 1 to 6mm.

2. A pneumatic tire according to claim 1, wherein
an inner groove wall surface of said narrow groove inside the tire axial direction is also formed of crack-resistant layer using the crack-resistant rubber material, the crack-resistant layer has substantially U-shaped cross section, a thickness t3 of the crack-resistant layer perpendicular to said inner groove wall surface is set to 2mm or less.

3. A pneumatic tire according to 1 or 2, wherein
a tensile strength of said crack-resistant rubber material is 23 to 28MPa, and elongation at the time of cutting thereof is 550 to 620%.

4. A pneumatic tire according to 3, wherein
in a state in which said crack-resistant rubber material is left in atmosphere of 100°C for 72 hours, the tensile strength thereof is 22MPa or higher and the elongation at the time of cutting is 480% or higher.
